# EUROPEAN PATENT SPECIFICATION

(11) **EP 0 288 276 B1**
(45) Date of publication and mention of the grant of the patent: **15.06.1994**
(21) Application number: 88303580.0
(22) Date of filing: 20.04.1988
(51) Int. Cl.: H04N 5/782

(54) **Magnetic-recording apparatus for recording a video signal and an audio signal**
Vorrichtung zur magnetischen Aufzeichnung eines Videosignals und eines Audiosignals
Dispositif d'enregistrement magnétique pour l'enregistrement d'un signal vidéo et d'un signal audio

(30) Priority: 20.04.1987 JP 97182/87
(43) Date of publication of application: 26.10.1988
(73) Proprietor: VICTOR COMPANY OF JAPAN, LIMITED, Yokohama-Shi Kanagawa-Ken 221 (JP)
(72) Inventor: Ohira, Tsunehisa, Sagamihara-shi Kanagawa-ken (JP)
(74) Representative: Robinson, John Stuart

(56) References cited:
- EP-A- 0 117 455
- EP-A- 0 136 808
- EP-A- 0 143 654
- EP-A- 0 166 861
- US-A- 4 603 360
- US-A- 4 633 332
- IEEE TRANSACTIONS ON CONSUMER ELCTRONICS, vol. CE-30, no. 3, August 1984, pages 360-368, IEEE, New York, US; K. MIURA et al.: "Hifi VCR system"

## Description

The present invention generally relates to magnetic recording apparatus, and more particularly to a magnetic recording apparatus for recording an audio signal on a relatively deep layer portion of a magnetic coating on a magnetic recording medium by means of a rotary audio signal recording head and for recording a video signal on a relatively shallow layer portion of the magnetic coating on the magnetic recording medium by means of a rotary video signal recording head.

According to the United States Patent US-A.3,846,819 to Warren, a so called "buried signal recording technique" is known in which a first signal having a relatively high frequency range is recorded on a relatively shallow layer portion of a magnetic coating on a magnetic recording medium and a second signal having a relatively low frequency range is recorded on a relatively deep layer portion of the magnetic coating by means of a helical scanning type video tape recorder using a rotary magnetic head. This technique is useful also in recording and reproducing an audio signal with an excellent quality in the helical scanning type video tape recorder. With this technique, the audio signal is recorded on and reproduced from the relatively deep layer portion of the magnetic coating on the magnetic recording medium by means of a rotary audio signal recording and reproducing head, while the video signal is recorded on and from a relatively shallow layer portion on the magnetic recording medium by means of a rotary video signal recording and reproducing head.

An article entitled "HIFI VCR SYSTEM" published in IEEE Transactions on Consumer Electronics, CE-30(1984), No.3, pages 360-369 discloses a sound recording system in which stereo sound signal is recorded using frequency modulated carriers of 1.3 and 1.7MHz. The sound is recorded deep into the magnetic tape. Then the video signal is recorded over the sound signal. The video signal is recorded in the surface layer of the tape, such that a multilayer recording is formed having sound information deep within the tape and video information at the surface of the tape. Furthermore, the document discloses long play recording, in which the width of the video track is reduced.

EP-A-0 117 455 discloses a video recording/reproduction apparatus having audio heads and video heads such that an audio signal is recorded and then partially overwritten by a video signal. In one embodiment a video head of a first size is provided for use at normal speed and a video head of a second size is provided for use in an extended play mode.

When recording the video signal and the audio signal on the recording medium in a long playing mode for an extended playing time using such a video tape recorder, a transportation speed of the magnetic recording medium is set to a speed slower than the transportation speed used in a standard playing mode for a standard playing time. As a result, the width of a video track formed in such a long playing mode inevitably becomes smaller than the width of the video track formed in the standard mode. Therefore, one has to use a rotary video signal recording head (referred to hereinafter simply as a "video head") having a smaller track width (a width of the track formed by the head which is not necessarily the same as the gap width of the head because of the head azimuth) corresponding to the track width of the recording track for the long playing mode. However, as for the rotary audio signal recording head (referred to hereinafter as an "audio head"), an audio head designed for the standard mode is used also in the long playing mode. This is simply in order to reduce the number of magnetic heads carried on a rotary drum to simplify the structure of the rotary drum and reduce the manufacturing cost.

It was found that the track width of the audio head aforementioned cannot be reduced significantly as compared to the track width of the video head for the long playing mode, since the level of a reproduced audio signal becomes too small for a satisfactory reproducing. Conversely, it is desired that the track width of the audio head is chosen as wide as possible for a satisfactory reproduction performance in the standard mode. Thus, the track width of the audio head is usually set to a width slightly larger than the track width of the video signal recording track for the long playing mode.

Meanwhile, the video track of the magnetic recording medium is recorded with a color video signal having the NTSC format, PAL format or the SECAM format. The color video signals having the PAL format and the SECAM format utilize a same number of scanning lines and a same field frequency. Further, the countries adopting the PAL system and the SECAM system are usually located adjacent to or relatively near each other. Thus, it is desirable to incorporate the recording and reproducing systems for both of the systems in a single video tape recorder to increase the efficiency of production.

In a video tape recorder using a color-under recording and reproducing system, two adjacent recording tracks on the magnetic recording medium are formed without a guard band or with a guard band having a small width by means of rotary magnetic heads having mutually different azimuth angles. In such a recoding system, however, a cross-talk due to a frequency converted carrier chrominance signal having a relatively low frequency picked up from the adjacent track deteriorates the picture quality because of the fact that the azimuth loss which decreases the cross-talk becomes less effective in such a low frequency range. Therefore, some kind of cross-talk suppressing means are usually used in such kind of video tape recorders.

As a means for suppressing the cross-talk in a video tape recorder for recording and reproducing a color video signal having the NTSC or the PAL format, the applicant disclosed in a French Patent Application FR-A-2328345 and a Japanese Patent Publication JP-A-49089179 a so called "Phase Shift" system in which a color sub-carrier of an amplitude modulated and frequency converted carrier chrominance signal is recorded by progressively shifting the phase thereof by 90 degrees in each one horizontal scanning interval (1H). The video signal is reproduced by regressively shifting the phase of the color sub-carrier by 90 degrees in each 1H which is a known technique in the industry. The reproduced carrier chrominance signal thus obtained is then passed through a comb filter to remove the cross-talk.

In the case of a video tape recorder for recording and reproducing a color video signal having the SECAM format, however, the Phase Shift system cannot be used because of the reason that the carrier chrominance signal in the color video signal having the SECAM format is a frequency modulated signal formed by frequency modulation of the carrier by a line sequential color difference signal, in contrast to the case of the NTSC and PAL systems. Therefore, the video tape recorder for recording and reproducing the SECAM color video signal according to the color-under recording (the carrier frequency of the chrominance signal is converted to lower range with respect to that of the luminance signal for recording) and reproducing system records the carrier chrominance signal by dividing the frequency, and reproduces the carrier frequency signal by multiplying the frequency of the reproduced frequency converted carrier chrominance signal to recover the original frequency and the original frequency deviation.

However, such a video tape recorder for recording and reproducing a SECAM format color video signal usually develops an inferior color reproduction at a fringe of the image as compared to the video tape recorder of the aforementioned Phase Shift system, particularly when the recording and reproducing is made in the long playing mode in which the recording and reproducing is made for an extended playing time for the same length of tape by reducing the transportation speed of the recording medium. Because of this, in order to reduce the cross-talk, the guard band is formed between the video tracks which improves the picture quality when the SECAM color video signal is recorded in the long playing mode. On the other hand, an excellent picture quality is obtained even in the long playing mode when the PAL format color video signal is recorded. Thus, in such a case when the PAL format color video signal is recorded, it is preferable to eliminate the guard band between the tracks in favor of increased utilization of the recording medium.

In the buried signal recording system in which the guard band is formed between the video tracks in the long playing mode, a portion of an audio signal recording track (referred to hereinafter an "audio track") formed on the magnetic recording medium by the audio head overlaps with the guard band portion which extends outside of the video track when the track width of the audio head is chosen slightly larger than the track width of the video head for the long playing mode. Further, the overlap of a portion of the audio track with the guard band may also happen even if the track width of the audio head is reduced to a track width comparable to that of the video head because of the manufacturing deviation of the track width of the magnetic heads as well as because of the assembly error in the mounting position of the magnetic heads on the rotary drum.

Furthermore, in order to achieve a recorded tape compatibility between various models of the video tape recorders, there arises a problem of tracking error that the video head scans partly off the intended video track which is formed in the recording mode. In such a case, the video head scans over the portion of the audio track located in the guard band which exists between adjacent video tracks. As a result, the audio signal having a relatively low frequency range is picked up from the relatively shallow layer portion of the magnetic coating by the video head as the cross-talk and the picture quality is deteriorated.

According to the present invention, there is provided a magnetic recording apparatus as defined in appended Claim 1.

Preferred embodiments of the invention are defined in the other appended claims.

It is thus possible to provide a novel and useful magnetic recording apparatus wherein the problems aforementioned are eliminated.

It is thus possible to provide a magnetic recording apparatus for recording an audio signal along an audio signal recording track only on a relatively deep layer portion of a magnetic coating on a magnetic recording medium and for recording a video signal along a video signal recording track at a relatively shallow layer portion of the magnetic coating of the magnetic recording medium whereby cross-talk due to the audio signal picked up from the shallow layer portion of the magnetic coating of the magnetic recording medium is eliminated.

It is thus possible to provide a magnetic recording apparatus comprising a first video head for standard mode having a standard track width, a second video head for long playing mode having a relatively smaller track width than that of the first video head and an audio head also having a relatively smaller track width than that of the first video head, the second video head and the audio head are disposed at both sides of the first video head on an outer periphery of a rotary body around which is wound a magnetic recording medium transported to a predetermined direction for an angle of approximately 180 degrees in an oblique manner to the axis of rotation of the rotary body in such levels that, when the magnetic recording apparatus is operating in the long playing mode, an audio signal is first recorded on the magnetic recording medium along an audio signal recording track by means of the audio head, the first video head for standard mode supplied with a high frequency current then scans over the magnetic recording medium along a track having a width covering the audio signal recording track, and thereafter a video signal is recorded on the magnetic recording medium along a video signal recording track which is included in the track scanned by the first video head by means of the second video head for long playing mode. Thus, the magnetic recording apparatus records the audio signal in the long playing mode along the audio signal recording track on the magnetic recording medium. Then, the audio signal recorded on a relatively shallow layer portion of a magnetic coating on the portion of magnetic recording medium corresponding to the audio signal recording track is erased by the first video head for standard mode. Thereafter, the video signal is recorded on a relatively shallow layer portion of the magnetic coating of the magnetic recording medium corresponding to the track erased by the first video head by means of the second video head for the long playing mode. According to this recording procedure, the audio signal is recorded on the magnetic recording medium along the audio signal recording track only on the relatively deep layer portion of the magnetic coating of the magnetic recording medium, and the video signal is recorded on the magnetic recording medium along the video signal recording track only on the relatively shallow layer portion of the magnetic coating of the magnetic recording medium.

It is further possible to provide a magnetic recording and reproducing apparatus not only capable of erasing a surface layer portion of a magnetic recording medium corresponding to an audio signal recording track but also performing erasing of a portion of a video signal recording track recorded with a video signal in a preceding field by a predetermined width by superimposing a new video signal. Thus, the erased portion of the video signal recording track forms a guard band located between two adjacent video signal recording tracks. Of course, the audio signals recorded on the relatively shallow layer portion of the magnetic recording medium is erased. Therefore, the cross-talk of the audio signal is virtually eliminated even if the video head scans over a portion of the guard band in such a case that a slight deviation exists between the video track recorded with the video signal and the audio track recorded with the audio signal or in such a case that a portion of the audio track is included in the aforementioned guard band.

Accordingly, the magnetic recording apparatus of the present invention provides a reproduced video signal having an excellent quality. Further, the magnetic recording apparatus provides an excellent quality of reproduced audio signal by the use of the audio head having a relatively larger track width as compared to the conventional magnetic recording apparatus. Furthermore, the present invention enables the integration of the recording systems for the PAL system and for the SECAM system into one recording apparatus. Thereby, the efficiency of production is improved.

The present invention will be further described, by way of example, with reference to the accompanying drawings, in which:
FIG.1 is a plan view showing an arrangement of magnetic heads according to a first embodiment of the magnetic recording apparatus of the present invention;
FIG.2 is a developed view showing the arrangement of the magnetic heads in FIG.1 on an outer periphery of a rotary body;
FIG.3 is a circuit diagram showing an example of the recording circuit applicable to the magnetic recording apparatus of the present invention;
FIG.4 is a diagram showing a track pattern formed on a magnetic recording medium by the magnetic heads arranged as shown in FIGS.1 and 2;
FIGS.5(A) - (C) are timing charts showing the timing of track formation on the magnetic recording medium by the magnetic heads arranged as shown in FIGS.1 and 2;
FIG.6 is a developed view showing the arrangement of magnetic heads according to a second embodiment of the magnetic recording apparatus of the present invention,
FIGS.7(A) - (D) are diagrams showing steps for forming a track pattern on the magnetic recording medium by the magnetic heads arranged as shown in FIG.6,
FIG.8 is a diagram showing the track pattern formed by the magnetic heads arranged as shown in FIG.6,
FIGS.9(A) - (C) are timing charts showing the timing of track formation on the magnetic recording medium by the magnetic heads arranged as shown in FIG.6 when a video signal having a SECAM format is recorded,
FIGS.10(A) - (C) are timing charts showing the timing of track formation on the magnetic recording medium by the magnetic heads arranged as shown in FIG.6 when a video signal having a PAL format is recorded,
FIG.11 is a diagram showing a track pattern formed by recording a video signal having a PAL format on the magnetic recording medium using the magnetic heads arranged as shown in FIG.6,
FIG.12 is a plan view showing the arrangement of the magnetic heads according to another embodiment of the magnetic recording apparatus of the present invention,
FIG.13 is a developed view showing the arrangement of the magnetic heads of FIG.12 along the outer periphery of the rotary body, and
FIGS.14(A) - (C) are timing charts showing the timing of track formation on the magnetic recording medium by the magnetic heads arranged as shown in FIGS. 12 and 13.

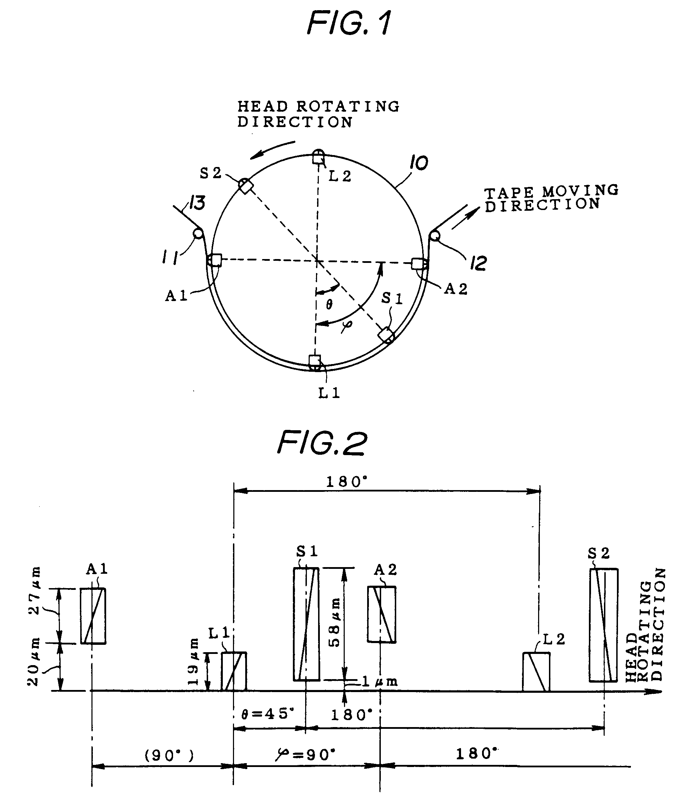

FIG.1 is a plan view showing the arrangement of magnetic heads in a first embodiment of the magnetic recording apparatus of the present invention. In the drawing, a rotary drum 10, which is an exemplary rotary body, is rotated to a predetermined direction and is wrapped around with a magnetic tape 13 which is an exemplary magnetic recording medium guided by guide poles 11 and 12 transported in a predetermined direction, for an angle exceeding 180° by an angle corresponding to an overlap recording portion. The magnetic tape 13 is wrapped around an outer periphery of the rotary drum 10 in an oblique manner to the axis of rotation of the rotary body 10. Such an arrangement is commonly used in helical scanning type video tape recorders of conventional design. The rotary drum 10 is rotated at a speed such that the time interval required for rotation of 180 degrees corresponds to one field of the video signal to be recorded.

On the outer periphery of the rotary drum 10, a video head S1 for the standard mode is mounted at an angular position preceding the angular position of a video head L1 for the long playing mode by an angle ϑ, in a direction of rotation of the rotary drum 10. Further, an audio head A2 is mounted on the outer periphery of the rotary body 10 at an angular position preceding the angular position of the video head L1 by an angle φ ( > ϑ ). Furthermore, at the angular positions preceding by 180° to those of the magnetic heads L1, S1 and A2 there are provided a video head L2 for long playing mode, a video head S2 for standard mode and an audio head A1, respectively.

FIG.2 is a developed view of the rotary drum 10 along the outer periphery thereof showing the arrangement of the magnetic heads in the first embodiment of the magnetic recording apparatus of the present invention. In the drawing, those parts identically constructed to those corresponding parts in FIG.1 are given the identical reference numerals and the description thereof will be omitted. It should be noted that the rotary drum 10 is rotated to the right as indicated by an arrow.

In the present embodiment, the track pitch of video tracks formed on the magnetic tape 13 is chosen to be 49 »m in the standard mode, while in the long playing mode, the track pitch of the video tracks is chosen to be 24.5 »m. Further, the angles ϑ and φ are chosen to be 45° and 90°, respectively. The video heads S1 and S2 for standard mode have a track width which is larger than the track pitch of 49 »m for the standard mode. In the example illustrated, this track width is chosen to 58 »m. The video heads L1 and L2 for long playing mode have a track width which is smaller than the track pitch of 24.5 »m for the long playing mode. In the example illustrated, this value is chosen to 19 »m. Further, the audio heads A1 and A2 have a track width of 27 »m which is slightly larger than the track pitch for the long playing mode which has a value of 24.5 »m.

In the illustrated example, the video heads S1 and L1 have an azimuth angle of + 6° while the video heads S2 and L2 have an azimuth angle of - 6°. The azimuth angles for the audio heads A1 and A2 are chosen to + 30 ° and - 30°, respectively.

The magnetic heads S1, S2, L1, L2, A1 and A2 are mounted on the outer periphery of the rotary drum 10 such that the bottom of the video heads S1 and S2 are located at a level higher than the level of the bottom of the video heads L1 and L2 by a distance of 1 »m. Further, the audio heads A1 and A2 are positioned such that bottoms thereof are located at a level higher than the level of the bottom of the video heads L1 and L2 by a distance of 20 »m.

In FIG.2, the magnetic tape 13 is transported obliquely to the direction of the axis of rotation of the rotary drum 10 from the upper left side to the lower right side of the drawing. Thus, the audio heads A1 and A2 as well as the video heads S1 and S2 are disposed on the outer periphery of the rotary drum 10 at levels which are offset to an upper end surface of the rotary drum 10 into which the running magnetic tape 13 enters for engagement. Relative to the the magnetic heads S1, S2 and A1 and A2, the video heads L1 and L2 for the long playing mode are disposed at a level which is offset to another end surface of the rotary drum 10 at which the magnetic tape 13 is released from engagement with the rotary drum 10.

As a result of the aforementioned arrangement of the magnetic heads, the audio track is formed near the center of the video track as much as possible in the standard mode, while in the long playing mode, the audio track is formed in a manner that it overlaps with the video track as much as possible (overlapped more than a half width of the video track formed in a preceding field).

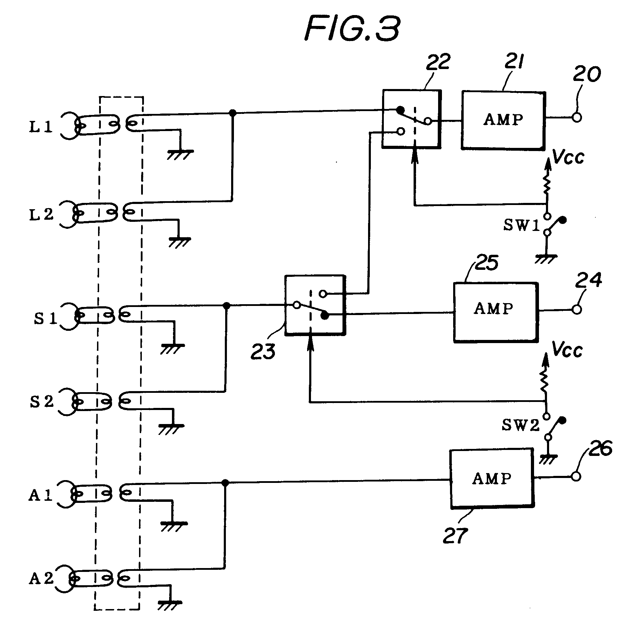

FIG.3 is a circuit diagram showing an example of a recording circuit cooperating with the video heads L1, L2, S1 and S2 and the audio heads A1 and A2.

In the drawing, an input video signal supplied to a video signal input terminal 20 is amplified by a recording amplifier 21 and supplied selectively to either one pair of the video heads L1 and L2 for the long playing mode or another pair of the video heads S1 and S2 for the standard mode through a standard mode/long playing mode selecting switch 22. This video signal may have a SECAM format or a PAL format. Further, another selector switch 23 is interposed between the selector switch 22 and the video heads S1 and S2 for the standard mode. The selector switch 23 selectively supplies either one of the video signal from the input terminal 20 for the standard mode and an erasing signal supplied to an erasing signal input terminal 24 and amplified by an recording amplifier 25 to the video heads S1 and S2 primarily for the standard mode. This erasing signal has a relatively high frequency sufficient for erasing the signals recorded only on the relatively shallow layer portion of the magnetic coating on the magnetic tape. For example, the erasing signal may be a signal having a frequency and amplitude similar to those of the high frequency bias signal commonly used in the video heads S1 and S2 for recording of the video signal. The selector switches 22 and 23 are activated by switches SW1 and SW2 in such a manner that the video signal supplied to the input terminal 20 is supplied to the video heads L1 and L2 and the erasing signal supplied to the input terminal 24 is supplied to the video heads S1 and S2 in the long playing mode at the same time. In other words, the long playing mode is represented in the drawing by a state that the selector switches 22 and 23 are switched to a side of contacts represented by a black dot. The audio signal is supplied to an audio signal input terminal 26 and supplied to the audio heads A1 and A2 after amplification in a recording amplifier 27. In the case of the recording in the standard playing mode, the selector switches 22 and 23 are switched to the side of the contacts represented by circles and the video heads L1 and L2 are made inoperative. Thus, the video signal is supplied from the input terminal 20 to the video heads S1 and S2 via the amplifier 21.

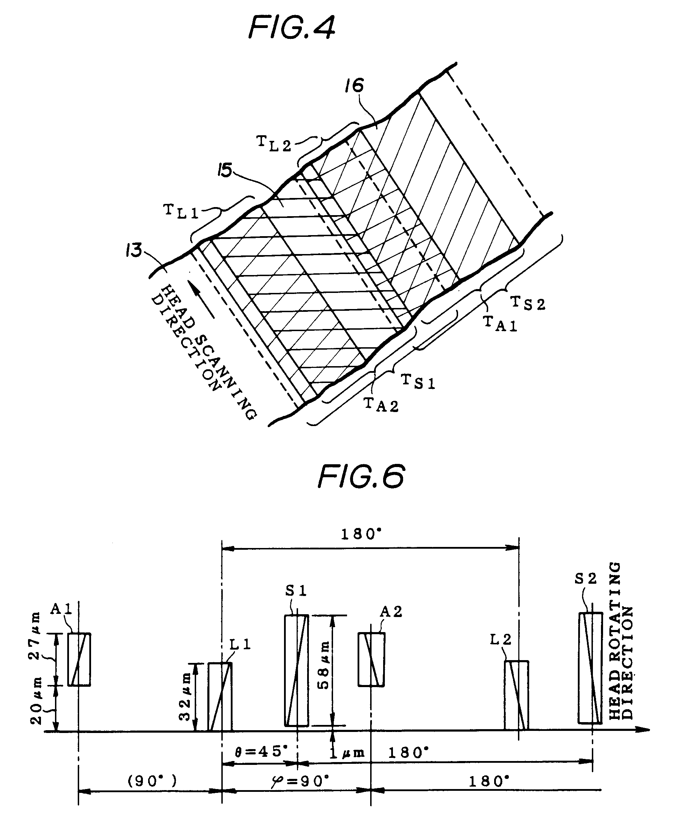

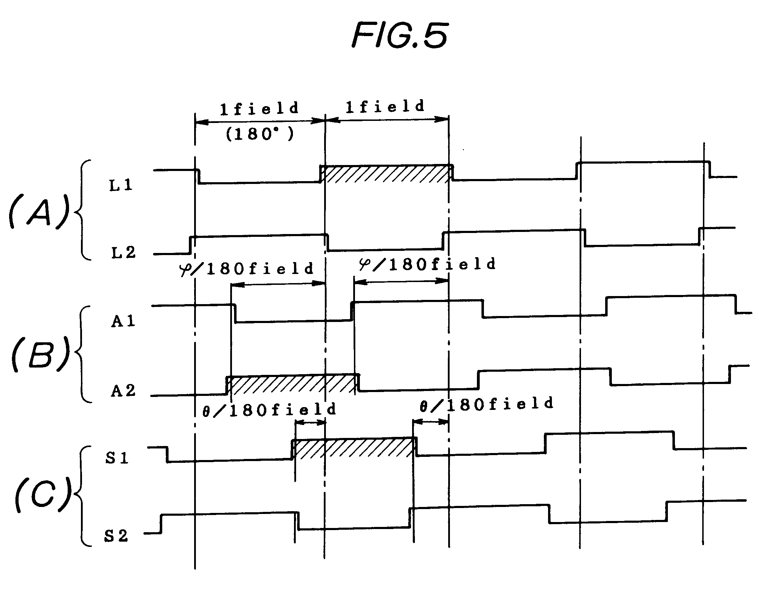

Next, formation of track patterns on the magnetic tape 13 by the magnetic heads arranged as in FIGS.1 and 2 will be described with reference to FIGS.4 and 5.

FIG.4 is a drawing showing the recording tracks formed by the magnetic heads L1, L2, S1, S2, A1 and A2 on the magnetic tape 13. FIGS.5(A) through (C) are timing charts showing the timing of formation of the recording tracks on the magnetic tape 13 by the magnetic heads. In FIGS.5(A) - (C), the portions represented by the "high level" state represents the interval in which the magnetic heads engage with the magnetic tape and scan the surface of the tape in an activated state. As illustrated in FIG.1, the magnetic tape 13 is wrapped around the outer periphery of the rotary drum 10 for an angle which exceeds slightly over 180 degrees. Therefore, the length of the high level state corresponding to the interval in which the magnetic head engages with the magnetic tape is slightly longer than the interval of the "low level" state where the magnetic head is not in engagement with the magnetic tape 13 for all of the magnetic heads.

In the long playing mode, the audio head A2 engages with the magnetic tape 13 transported with a predetermined low transportation speed with a timing indicated by a high level portion of FIG.5(B) which is hatched. Thus, a frequency modulated audio signal is recorded on the magnetic tape for an entire thickness of the magnetic coating on the magnetic tape along an audio track TA2 shown in FIG.4. As the frequency modulated audio signal has a relatively low frequency range as compared to the frequency modulated video signal to be described, the audio signal is recorded up to a relatively deep layer portion of the magnetic coating on the magnetic tape. Next, the video head S1 for the standard mode supplied with the aforementioned erasing signal having a relatively high frequency engages with the magnetic tape 13 with a timing indicated by the hatched high level portion of FIG.5(C). Thereby, the audio signal recorded on the relatively shallow layer portion of the magnetic coating on the magnetic tape 13 is erased along an erasing track TS1 as shown in FIG.4. As described previously, the frequency of the erasing signal is set to a frequency such that the signals recorded only on the relatively shallow layer portion of the magnetic coating are erased and such that the erasing signal does not deteriorate the reproduced video signal when it is reproduced by the video heads L1 and L2 for the long playing mode. Thus, it should be understood that the audio signal remains on the relatively deep layer portion of the magnetic tape 13 in the audio track TA2 even in the event that the erasing track TS1 is formed thereon.

During the time interval between the formation of the audio track TA2 and the erasing track TS1, the magnetic tape 13 is transported by a predetermined distance. As shown in FIG.1, the video head S1 for the standard mode having a predetermined track width is disposed on the rotary drum 10 at the predetermined angular position retarded from the angular position of the audio head A2 by the angle of φ - ϑ at a predetermined level as shown in FIG.2. Therefore, the audio track TA1 is formed in a manner such that it is within the erasing track TS1 (FIG.4).

In the example illustrated in FIG.4, the track width of the video head S1 for the standard mode is relatively larger than the track width of the audio head A2.

Therefore, the signals recorded on the relatively shallow layer portion of the magnetic coating in the audio track TA2 is completely erased. However, it should be noted that those portions of the audio track TA2 which are superimposed with recording by the video head L1 in the subsequent recording step is not necessarily erased by the video head S1.

Next, the video head L1 for the long playing mode starts scanning over the surface of the magnetic tape 13 as shown in FIG.5(A) with a timing indicated by the hatched high level portion. As shown in FIG.5(A), the timing by which the video head L1 enters into engagement with the rotary drum 10 is retarded by an interval of φ/180 fields relative to the timing in which the audio signal starts the recording (retarded by an interval of ϑ/180 fields relative to the timing in which the video head S1 starts erasing). Thereby, the frequency modulated video signal having the relatively high frequency range which is a frequency division multiplex signal comprising a frequency modulated luminance signal and a frequency converted carrier chrominance signal) is recorded on the magnetic tape 13 along the video track TL1. As the frequency modulated video signal has a frequency in the relatively high frequency range, the video signal is recorded only on the relatively shallow layer portion of the magnetic tape 13 in the video track TL1 as a result of the skin effect. Thus, the audio signal recorded on the relatively deep layer portion of the magnetic coating in the audio track TA2 remains unerased by the formation of the erasing track TL1.

Again, the magnetic tape 13 is transported by a predetermined distance during the interval between the formation of the erasing track TS1 and the formation of the video track TL1. Because of the arrangement of the video head L1 on the rotary drum 10 such that the video head L1 is disposed at the angular position following the angular position of the video head S1 by the predetermined angle ϑ at a level corresponding to the lower end of the magnetic head S1 as illustrated in FIG.2, the video track TL1 is formed so that it partially overlaps with the audio track TA2 within the erasing track TS1. As described previously, it is desirable to dispose the video track TL1 and the audio track TA2 so that the audio track TA2 overlaps with the video track as much as possible in the long playing mode. In other words, the audio track TA2 is overlapped more than a half width of the video track formed in the preceding field.

Thus, as can be seen in FIG.4, the audio track TA2 and the video track TL1 are formed so that they overlap each other in most of the track portions except for a track portion 15 formed in the audio track TA2 with a predetermined width. In contrast to the conventional magnetic recording apparatus of such type, signals recorded on the relatively shallow layer portion of the magnetic coating in the track portion 15 are erased by the video head S1 when the video head S1 forms the erasing track TS1. The frequency modulated audio signal is recorded only on the relatively deep layer portion of the magnetic coating.

Next, the audio head A1 starts scanning over the magnetic tape 13 to form an audio track TA1 in FIG.4 in a similar way as that for the audio head A2, whereby the frequency modulated audio signal is recorded throughout the entire depth of the magnetic coating on the magnetic tape 13. Thereafter, the audio signal recorded on the relatively shallow layer portion of the magnetic coating is erased by the video head S2 along an erasing track TS2. Then, the video signal corresponding to the subsequent field is recorded on the relatively shallow layer portion of the magnetic coating in the audio track TA1 along a video track TL2. Thus, the video tracks are formed on the magnetic tape consecutively with a guard band therebetween.

Obviously, the arrangement of the magnetic heads L1, L2, S1, S2, A1 and A2 on the rotary drum for scanning the magnetic tape along the tracks shown in FIG.4 depends on the rotational speed of the rotary drum, diameter of the rotary drum, the transportation speed of the magnetic tape, desired track pitch, and the like. Further, even if these parameters are fixed, there still remains a considerable degree of freedom in the determination of the position of the magnetic heads on the rotary drum 10 for the formation of the tracks shown in FIG.4. The proper arrangement of the position of the magnetic heads on the rotary drum for a desired track pattern can be utilized by those skilled in the art and therefore is not described here in detail, except that the video heads S1 and S2 for the standard mode are provided on the rotary drum so that the video tracks formed by these video heads S1 and S2 in the standard mode are located on the magnetic tape adjacent to each other without the guard band therebetween and so that the audio heads A1 and A2 are provided on the rotary drum in such a manner that the audio tracks formed by these audio heads A1 and A2 in the long playing mode are located on the magnetic tape adjacent to each other without the guard band therebetween. In other words, the level and the angular positions of the video heads S1 and S2 are set so that the video heads S1 and S2 scan over the magnetic tape in a manner such that they do not erase the video tracks recorded in the prior field period (no track overlap each other) but erase the relatively shallow layer portion of the audio track recorded by either of the preceding audio heads A2 or A1. The level and the angular positions of the audio heads A1 and A2 may be set to satisfy the desired industry standard track pattern. Usually, the audio heads are mounted so that the audio tracks do not extend beyond the side of the video track towards the preceding field. Preferably, the audio heads A1 and A2 are mounted such that they form the audio tracks located as accurate as possible to the center of the video tracks in the standard mode and such that they form the audio tracks overlapping with the video tracks as much as possible in the long playing mode. Examples of the arrangement of the magnetic heads on the rotary drum for a desired track pattern on the magnetic tape is described in our commonly owned United States Patents No.US-A 4,633,332 and US-A 4,660,104.

Next, a description is given on a second embodiment of the magnetic recording apparatus of the present invention for recording a color video signal having the SECAM format on a magnetic tape along video tracks with guard bands therebetween in the long playing mode for improvement of the picture quality, and for recording a color video signal having a PAL format on a magnetic tape along video tracks without guard bands therebetween in the long playing mode for improvement of the efficiency of tape utilization. In the present embodiment, the circuit construction is identical to the one shown in the circuit diagram of FIG.3 and therefore the circuit diagram for this embodiment will be omitted together with the description. Further, the angular positions of the magnetic heads on the rotary drum are the same as those shown in FIG.1 and therefore the plan view of the rotary drum for this embodiment is omitted.

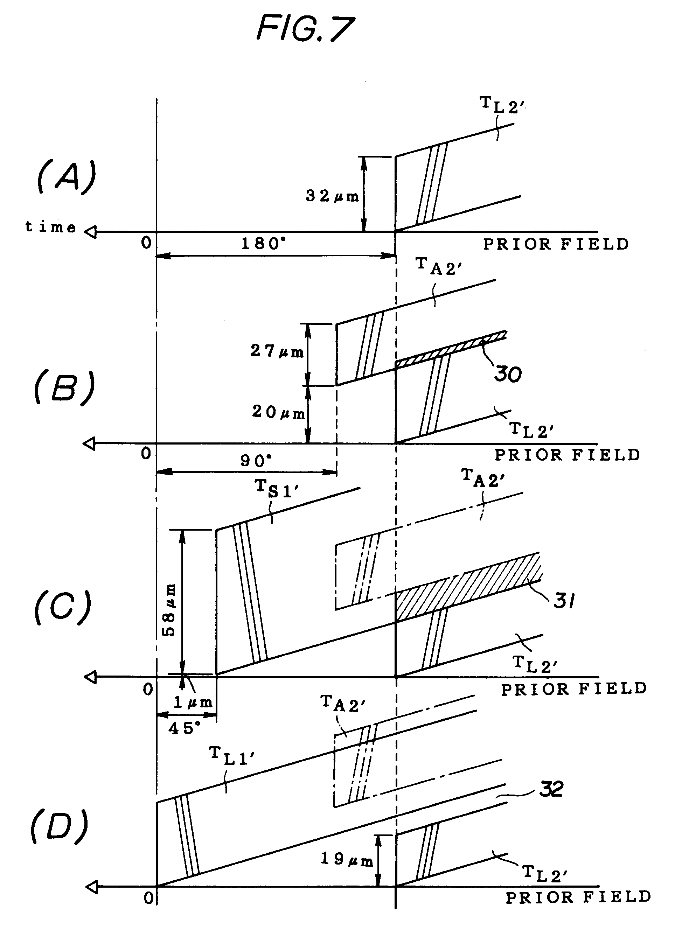

FIG.6 is a developed view similar to FIG.2 and shows the arrangement of magnetic heads on the rotary drum according to the second embodiment of the magnetic recording apparatus. In the drawing, those parts constructed identically to those corresponding parts in FIG.2 are given identical reference numerals and the description thereof will be omitted.

Referring to FIG.6, the track width of the video heads L1 and L2 for the long playing mode is chosen to have a value slightly larger than the track pitch of 24.5 »m for the long playing mode. In the example illustrated, the track width is set to 32 »m. The track widths for the video heads S1, S2 and the audio heads A1, A2 are made the same as those in the first embodiment. Further, the levels of the magnetic heads are chosen the same as those in the first embodiment.

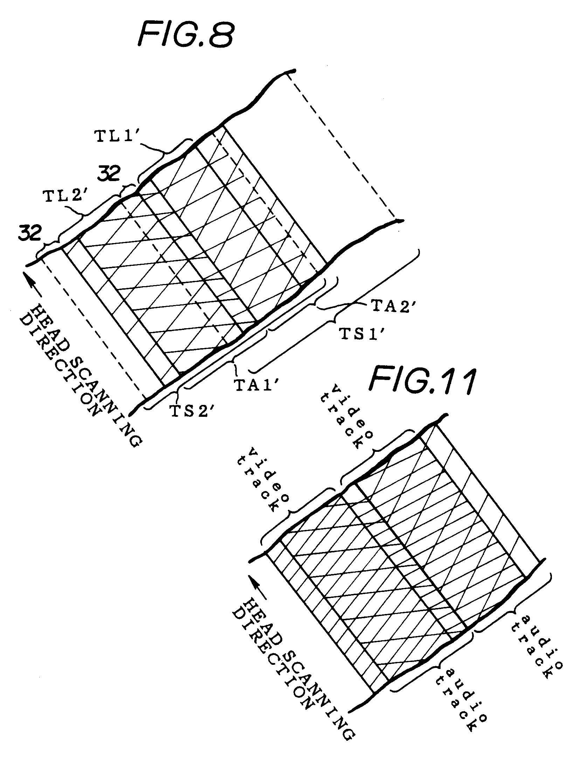

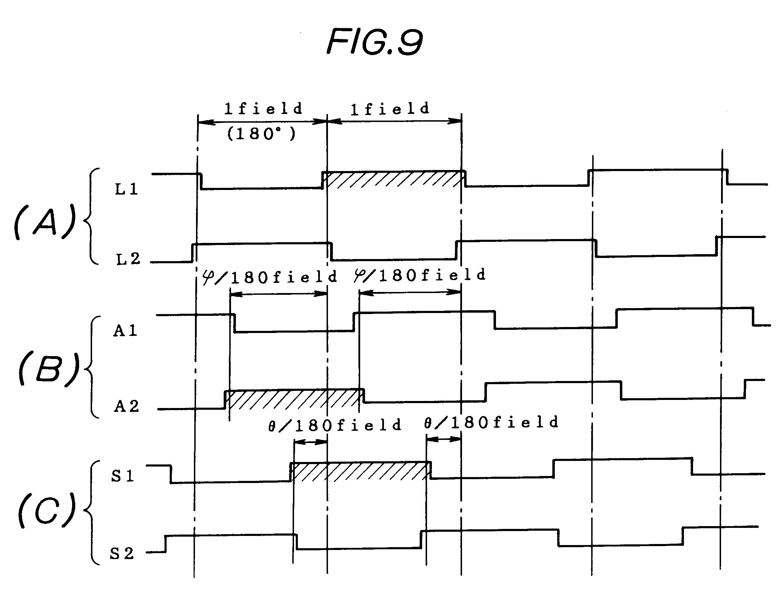

Next, the formation of the track patterns of the magnetic recording medium when the color video signal having the SECAM format is recorded on the magnetic tape 13 will be described with reference to FIGS.7(A) - (D), and FIG.8 as well as with reference to FIGS.9(A) - (C) which are timing charts similar to those shown in FIGS.5(A) - (C).

Referring to FIG.7(A), a color video signal having the SECAM format and corresponding to a field preceding by one horizontal scanning interval to the color video signal to be considered is recorded on the magnetic tape 13 with a timing indicated by the high level portion of the waveform L2 at the left end of FIG.9(A). Thereby, the video signal is recorded on the relatively shallow portion of the magnetic coating formed on the magnetic tape 13 along a track TL2ʹ. Then, the frequency modulated audio signal is recorded with a timing indicated by the hatched high level portion shown in FIG.9(B) by the audio head A2 on the magnetic tape 13 up to the relatively deep layer portion of the magnetic coating along a track TA2ʹ.

Next, a high frequency signal aforementioned is recorded by the video head S1 for the standard mode on the magnetic tape 13 with a timing shown by the hatched high level portion of FIG.9(C) along an erasing track TS1ʹ, whereby the signals recorded only on the relatively shallow layer portion of the magnetic coating on the magnetic tape 13 are erased along the erasing track TS1ʹ. Thus, a portion 31 of the video track TL2ʹ shown in FIG.7(C) is erased by superimposing the high frequency signal for a width of approximately 19 »m. At the same time, the audio signal recorded on the relatively shallow layer portion of the magnetic coating along the audio track TA2ʹ is erased by the video head S1. However, the audio signal recorded on the relatively deep layer portion of the magnetic coating along the audio track TA2ʹ remains unerased.

Next, the color video signal having the SECAM format and corresponding to the field retarded by one horizontal scanning interval from the field of the video signal recorded along the video track TL2ʹ is recorded on the magnetic tape 13 by the video head L1 for the long playing mode with a timing shown in FIG.9(A) by the hatched high level portion along a video track TL1ʹ as illustrated in FIG.7(D). Thereby, a guard band 32 is formed between two adjacent video tracks TL2ʹ and TL1ʹ.

Repeating the procedure as described, one can obtain a track pattern as shown in FIG.8 in which the desired guard band is formed between the mutually adjacent video tracks and the signals on the relatively shallow layer portion of the magnetic coating on the audio track portion which extends outside of the video track is erased.

From the magnetic tape having such a track pattern, one can reproduce the color video signal having the SECAM format without deterioration of the picture quality. Further, the deterioration of the reproduced color video signal due to the tracking error of the video head scanning over the audio track portion deviating to outside of the video track is prevented as no signal is recorded on the relatively shallow layer portion of the magnetic coating defined by such an audio track portion.

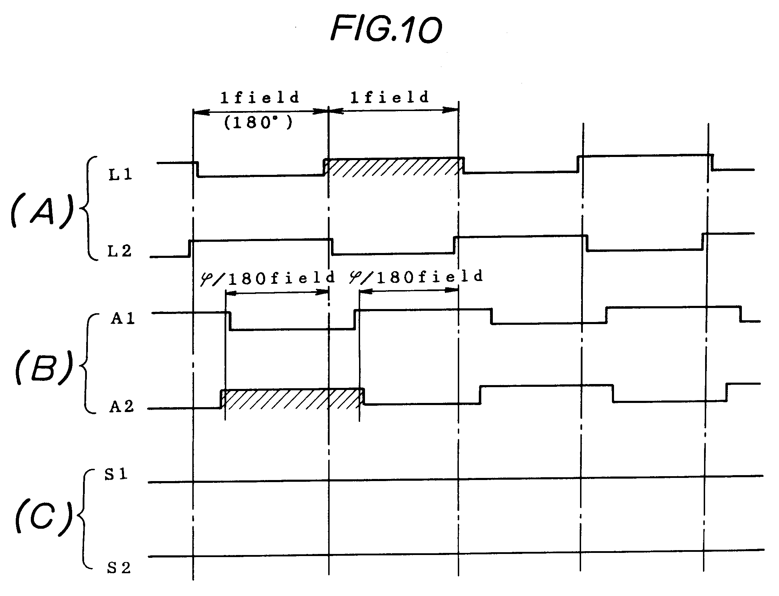

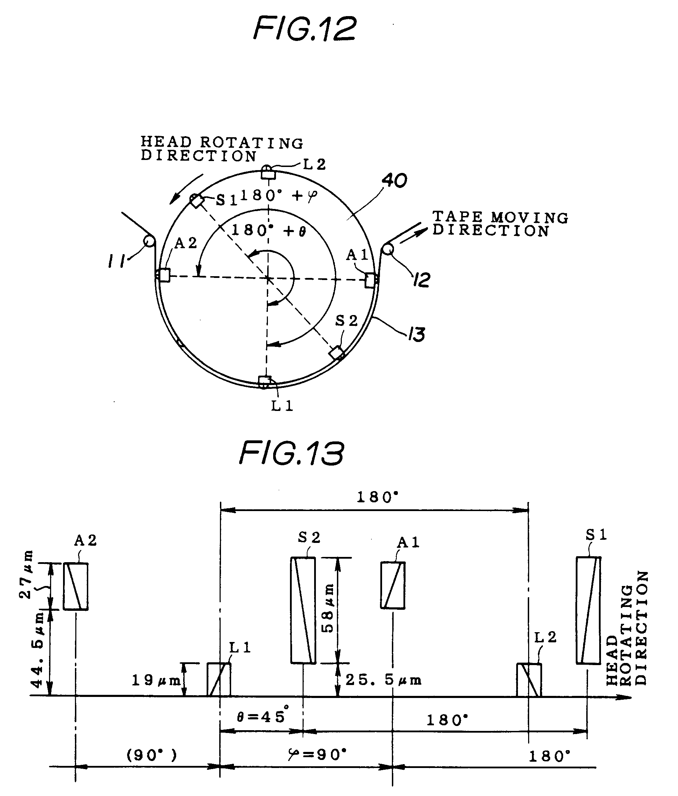

In such a case when recording a color video signal having the PAL format on the magnetic tape 13 by means of the magnetic heads arranged as shown in FIG.6 together with the audio signal, the video heads S1 and S2 are made inoperative. Then, a track pattern having no guard band as shown in FIG.11 is formed on the magnetic tape 13. Referring to FIGS.10(A) - (C), the video heads L1, L2 and the audio heads A1, A2 alternatively engage with the magnetic tape 13 to form the video track and the audio track. However, the video heads S1 and S2 do not erase the recorded signal when they engage with the magnetic tape 13. FIG.10(C) indicates that the video heads S1 and S2 are made inoperative by the flat wave forms for the video heads S1 and S2.

Next, still another embodiment of the magnetic recording apparatus of the present invention will be described with reference to a plan view of FIG.12 and a developed view of FIG.13. In both of the drawings, those parts constructed identically to those corresponding parts in FIG.1 are given identical reference numerals and the description thereof will be omitted. Further, the circuit diagram for the magnetic recording apparatus of the present embodiment is omitted as the recording circuit for the present apparatus is identical to the one already shown in FIG.3.

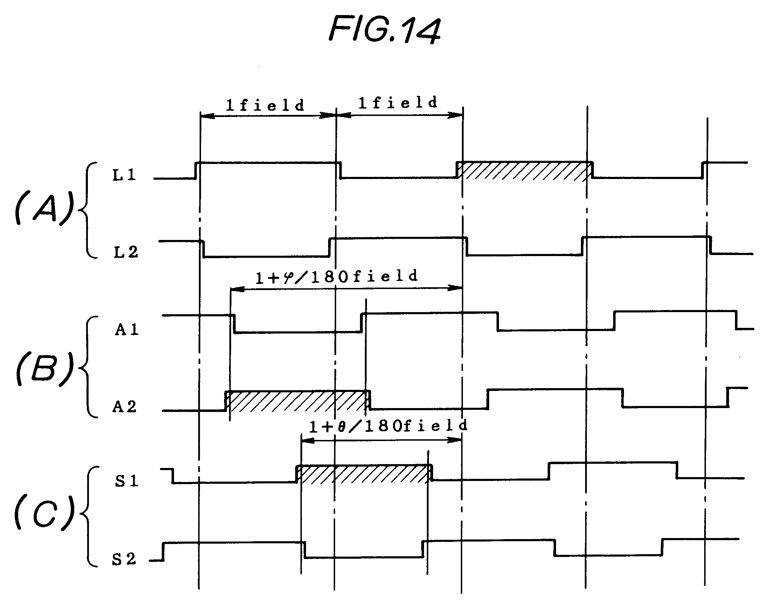

Referring to FIG.12, it can be seen that the video head S1 for the standard mode and the audio head A2 are provided on a rotary drum 40 at angular positions advanced additionally to the corresponding magnetic heads in FIG.1 by an angle of 180 degrees respectively. Further, the levels of the respective magnetic heads on the outer periphery of the rotary drum 40 is changed as illustrated in FIG.13. It should be noted that the levels of the magnetic heads S1, S2, A1 and A2 relative to the levels of the magnetic heads L1 and L2 are much higher than the corresponding levels in the case of first and second embodiments. This arrangement of the magnetic heads also produces the track pattern similar to the one shown in FIG.4. Referring to FIGS.14(A) - (C) which are timing charts similar to FIGS.5(A) - (C), the audio head A2 engages with the magnetic tape 13 to form the audio track TA2 shown in FIG.4(B). Next, the video head S1 for the standard mode engages with the magnetic tape 13 to form the erasing track TS1 with timings indicated by the hatched high level portion of FIG.14 (C). Then, the video head L1 for the long playing mode engages with the magnetic tape 13 with a timing shown in FIG.14(A) to form the recording track TL1. It should be noted that the timing by which the magnetic heads A2 and S1 engage with the magnetic tape 13 is advanced by one field to the timing shown in FIGs.5(A) - (C).

Thus, the present embodiment produces a track pattern similar to that for the first embodiment having the arrangement of the magnetic heads in FIG.2, except for the fact that the video signal recorded on the video track TL1 is retarded by one field from the field of the video signal corresponding to the audio signal recorded in the audio track TA2.

## Claims

1. A magnetic recording apparatus for recording a video signal and an audio signal respectively on a relatively shallow layer portion and a relatively deep layer portion of a magnetic coating on a magnetic recording medium in either one of a standard mode for a standard playing time and a long playing mode for an extended playing time which is longer than the standard playing time for a given tape length comprising a rotary body (10, 40) wrapped around over a predetermined angular range by the magnetic recording medium (13) running in a predetermined direction in an oblique manner to an axis of rotation of the rotary body, first recording head means (L1, L2) for the long playing mode disposed on an outer periphery of the rotary body for recording the video signal on the shallow layer portion of the magnetic coating on the magnetic recording medium by scanning the magnetic recording medium along a first recording track (TL1, TL2, TL1ʹ, TL2ʹ) having a first width in the long playing mode, second recording head means (S1, S2) for the standard mode disposed on the outer periphery of the rotary body so as to precede the first recording head means by a first angle for recording the video signal on the shallow layer portion of the magnetic coating on the magnetic recording medium by scanning the magnetic recording medium along a second recording track (TS1, TS2, TS1ʹ, TS2ʹ) having a second width in the standard mode, and third recording head means (A1, A2) disposed on the outer periphery of the rotary body so as to precede the second recording head means for the standard mode by a second angle for recording the audio signal for an entire depth of the magnetic coating on the magnetic recording medium by scanning the magnetic recording medium along a third track (TA1, TA2, TA1', TA2') in the long playing mode and in the standard mode, the second recording head means (S1, S2) having track width larger than any of the first recording head means (L1, L2) and the third recording head means (A1, A2), said second recording head means is disposed on the outer periphery of the rotary body (10) and a height of said second recording head means being arranged with respect to the first and third recording head means so that the third recording track (TA1, TA2, TA1', TA2') is located within the second recording track (TS1, TS2) on the recording medium (13), said first recording head means is disposed on the outer periphery of the rotary body at such a level relative to the levels of the second and third recording head means resulting in that the first recording track (TL1, TL2, TL1', TL2') is located within the second recording track, characterised in that, in long play mode, said second recording head means scans over the magnetic recording medium along the second recording track after the third recording head means records the audio signal on the recording medium along the third recording track so that said second recording head means scans the magnetic recording medium including the third recording track and applies an erase signal thereto so as to erase the shallow layer of the recording medium adjacent said second recording head means while leaving a layer of the sound recording track unaltered, and that after the second recording head means scans the recorded recording tracks the first recording head means scans the first recording track which is located within the second recording track and records the video signal in the shallow layer.

2. A magnetic recording apparatus as claimed in claim 1 characterized in that said first recording head means (L1, L2) and said third recording head means (A1, A2) are disposed on the outer periphery of the rotary body (10) at such level resulting that the first recording track (TL1, TL2, TL1ʹ, TL2ʹ) and the third recording track (TA1, TA2, TA1ʹ, TA2ʹ) overlap each other at least in part.

3. A magnetic recording apparatus as claimed in claim 2 characterized in that the track width of the third recording head means (A1, A3) is larger than the track width of the first recording head means (L1, L2).

4. A magnetic recording apparatus as claimed in claim 2 characterized in that the track width of the first recording head means (L1, L2) is larger than a pitch of the first recording track for the long playing mode and the first recording head means is provided on the outer periphery of the rotary body (10) at such a level resulting that a portion of the first recording track on which a video signal is recorded for a first field is scanned by the second recording head means (S1, S2) prior to the recording of the video signal for a subsequent field.

5. A magnetic recording apparatus as claimed in claim 2 characterized in that said second recording head means (S1, S2) has a track width chosen so that resulted two adjacent second recording tracks (TS1, TS2) respectively corresponding to a first field and a second field of the video signal are located on the magnetic recording medium (13) side by side without any non-recorded area left therebetween in the standard mode.

6. A magnetic recording apparatus as claimed in claim 2 characterized in that said third recording head means (A1, A2) has a track width chosen so that resulted two adjacent third recording tracks (TA1, TS2) respectively corresponding to a first field and a second field of the video signal are located on the magnetic recording medium (13) side by side without any non-recorded area left therebetween in the long playing mode.

7. A magnetic recording apparatus as claimed in claim 1 characterized in that the apparatus further comprises first switching means (22) for supplying a video signal selectively to one of the first recording head (L1, L2) and the second recording head (S1, S2), and second switching means (23) for selectively supplying either one of the video signal from the first switching means (22) and an erasing signal for erasing signals recorded on the shallow layer portion of the magnetic coating on the magnetic recording medium (13) to the second recording head, said first and second switching means are operated so that the second recording head is supplied with the video signal and the first video head is made inoperative in the standard mode, and so that the first recording head is supplied with the video signal and the second recording head is supplied with the erasing signal in the long playing mode.

## Patentansprüche

1. Magnetisches Aufzeichnungsgerät zum Aufzeichnen eines Videosignals und eines Audiosignals jeweils auf einem verhältnismäßig flachen Schichtteil und einem verhältnismäßig tiefen Schichtteil eines magnetischen Überzugs auf einem magnetischen Aufzeichnungsträger in einer Standardbetriebsart für eine Standardspielzeit oder einer Langspiel-Betriebsart für eine verlängerte Spielzeit, die länger als die Standardspielzeit für eine vorgegebene Bandlänge ist, mit einem Drehkörper (10, 40), der über einen vorbestimmten Winkelbereich mit dem magnetischen Aufzeichnungsträger (13), der in einer vorbestimmten Richtung schräg zu einer Drehachse des Drehkörpers läuft, umwickelt ist, mit einer ersten Aufzeichnungskopfeinrichtung (L1, L2) für die Langspiel-Betriebsart auf einem äußeren Umfang des Drehkörpers zum Aufzeichnen des Videosignals auf dem flachen Schichtteil des magnetischen Überzugs auf dem magnetischen Aufzeichnungsträger durch Abtasten des magnetischen Aufzeichnungsträgers längs einer ersten Aufzeichnungsspur (TL1, TL2, TL1', TL2') mit einer ersten Breite in der Langspiel-Betriebsart, mit einer zweiten Aufzeichnungskopfeinrichtung (S1, S2) für die Standardbetriebsart, die so auf dem äußeren Umfang des Drehkörpers angeordnet ist, daß sie der ersten Aufzeichnungskopfeinrichtung um einen ersten Winkel vorauseilt, um das Videosignal auf dem flachen Schichtteil des magnetischen Überzugs auf dem magnetischen Aufzeichnungsträger durch Abtasten des magnetischen Aufzeichnungsträgers längs einer zweiten Aufzeichnungsspur (TS1, TS2, TS1', TS2') mit einer zweiten Breite in der Standardbetriebsart aufzuzeichnen, und mit einer dritten Aufzeichnungskopfeinrichtung (A1, A2), die auf dem äußeren Umfang des Drehkörpers so angeordnet ist, daß sie der zweiten Aufzeichnungskopfeinrichtung für die Standardbetriebsart um einen zweiten Winkel vorauseilt, um das Audiosignal für die gesamte Tiefe des magnetischen Überzugs auf dem magnetischen Aufzeichnungsträger durch Abtasten des magnetischen Aufzeichnungsträgers längs einer dritten Spur (TA1, TA2, TA1', TA2') in der Langspiel-Betriebsart und in der Standardbetriebsart aufzuzeichnen, wobei die zweite Aufzeichnungskopfeinrichtung (S1, S2) eine größere Spurbreite als die erste Aufzeichnungskopfeinrichtung (L1, L2) und die dritte Aufzeichnungskopfeinrichtung (A1, A2) aufweist, die zweite Aufzeichnungskopfeinrichtung auf dem äußeren Umfang des Drehkörpers (10) angeordnet und eine Höhe der zweiten Aufzeichnungskopfeinrichtung so in bezug auf die erste und dritte Aufzeichnungskopfeinrichtung gewählt ist, daß die dritte Aufzeichnungsspur (TA1, TA2, TA1', TA2') innerhalb der zweiten Aufzeichnungsspur (TS1, TS2) auf dem Aufzeichnungsträger (13) liegt, die erste Aufzeichnungskopfeinrichtung auf dem äußeren Umfang des Drehkörpers in einer solchen Höhe relativ zu den Höhen der zweiten und dritten Aufzeichnungskopfeinrichtung angeordnet ist, daß die erste Aufzeichnungsspur (TL1, TL2, TL1', TL2') innerhalb der zweiten Aufzeichnungsspur liegt,
**dadurch gekennzeichnet,**
daß in der Langspiel-Betriebsart die zweite Aufzeichnungskopfeinrichtung den magnetischen Aufzeichnungsträger längs der zweiten Aufzeichnungsspur abtastet, nachdem die dritte Aufzeichnungskopfeinrichtung das Audiosignal auf dem Aufzeichnungsträger längs der dritten Aufzeichnungsspur aufzeichnet, so daß die zweite Aufzeichnungskopfeinrichtung den magnetischen Aufzeichnungsträger, einschließlich der dritten Aufzeichnungsspur, abtastet und daran ein Löschsignal so anlegt, daß die an die zweite Aufzeichnungskopfeinrichtung angrenzende flache Schicht des Aufzeichnungsträgers gelöscht wird, wohingegen eine Schicht der Tonaufzeichnungsspur unverändert bleibt, und daß, nachdem die zweite Aufzeichnungskopfeinrichtung die bespielten Aufzeichnungsspuren abtastet, die erste Aufzeichnungskopfeinrichtung die erste Aufzeichnungsspur, die innerhalb der zweiten Aufzeichnungsspur liegt, abtastet und das Videosignal in der flachen Schicht aufzeichnet.

2. Magnetisches Aufzeichnungsgerät nach Anspruch 1,
**dadurch gekennzeichnet,**
daß die erste Aufzeichnungskopfeinrichtung (L1, L2) und die dritte Aufzeichnungskopfeinrichtung (A1, A2) auf dem äußeren Umfang des Drehkörpers (10) in einer solchen Höhe angeordnet sind, daß die erste Aufzeichnungsspur (TL1, TL2, TL1', TL2') und die dritte Aufzeichnungsspur (TA1, TA2, TA1', TA2') einander zumindest teilweise überlappen.

3. Magnetisches Aufzeichnungsgerät nach Anspruch 2,
**dadurch gekennzeichnet,**
daß die Spurbreite der dritten Aufzeichnungskopfeinrichtung (A1, A3) größer als die Spurbreite der ersten Aufzeichnungskopfeinrichtung (L1, L2) ist.

4. Magnetisches Aufzeichnungsgerät nach Anspruch 2,
**dadurch gekennzeichnet,**
daß die Spurbreite der dritten Aufzeichnungskopfeinrichtung (L1, L2) größer als eine Teilung der ersten Aufzeichnungsspur für die Langspiel-Betriebsart und die erste Aufzeichnungskopfeinrichtung auf dem äußeren Umfang des Drehkörpers (10) in einer solchen Höhe angeordnet ist, daß ein Teil der ersten Aufzeichnungsspur, in der ein Videosignal für ein erstes Bild aufgezeichnet ist, durch die zweite Aufzeichnungskopfeinrichtung (S1, S2) vor dem Aufzeichnen des Videosignals für ein folgendes Bild abgetastet wird.

5. Magnetisches Aufzeichnungsgerät nach Anspruch 2,
**dadurch gekennzeichnet,**
daß die zweite Aufzeichnungskopfeinrichtung (S1, S2) eine Spurbreite hat, die so gewählt ist, daß zwei sich ergebende benachbarte zweite Aufzeichnungsspuren (TS1, TS2), die jeweils einem ersten Bild und einem zweiten Bild des Videosignals entsprechen, auf dem magnetischen Aufzeichnungsträger (13) Seite an Seite liegen, ohne daß in der Standardbetriebsart ein unbespielter Bereich dazwischen verbleibt.

6. Magnetisches Aufzeichnungsgerät nach Anspruch 2,
**dadurch gekennzeichnet,**
daß die dritte Aufzeichnungskopfeinrichtung (A1, A2) eine Spurbreite hat, die so gewählt ist, daß zwei sich ergebende benachbarte dritte Aufzeichnungsspuren (TA1, TS2), die jeweils einem ersten Bild und einem zweiten Bild des Videosignals entsprechen, auf dem magnetischen Aufzeichnungsträger (13) Seite an Seite liegen, ohne daß in der Langspiel-Betriebsart ein unbespielter Bereich dazwischen verbleibt.

7. Magnetisches Aufzeichnungsgerät nach Anspruch 1,
**dadurch gekennzeichnet,**
daß das Gerät ferner aufweist: eine erste Schalteinrichtung (22) zur wählbaren Abgabe eines Videosignals an den ersten Aufzeichnungskopf (L1, L2) oder den zweiten Aufzeichnungskopf (S1, S2) und eine zweite Schalteinrichtung (23) zur wählbaren Abgabe des Videosignals aus der ersten Schalteinrichtung (22) oder eines Löschsignals zum Löschen von Signalen, die auf dem flacheren Schichtteil des magnetischen Überzugs auf dem magnetischen Aufzeichnungsträger (13) aufgezeichnet sind, an den zweiten Aufzeichnungskopf, wobei die erste und zweite Schalteinrichtung so betätigt werden, daß in der Standardbetriebsart dem zweiten Aufzeichnungskopf das Videosignal zugeführt und der erste Videokopf ausgeschaltet wird, und so, daß in der Langspiel-Betriebsart dem ersten Aufzeichnungskopf das Videosignal und dem zweiten Aufzeichnungskopf das Löschsignal zugeführt wird.

## Revendications

1. Un dispositif d'enregistrement magnétique pour l'enregistrement d'un signal vidéo et d'un signal audio respectivement sur une partie de couche relativement peu profonde et une partie de couche relativement profonde d'un revêtement magnétique sur un support d'enregistrement magnétique soit en mode standard pour un temps de fonctionnement standard, soit en mode de fonctionnement longue durée pour un temps de fonctionnement étendu qui est plus long que le temps de fonctionnement standard pour une longueur de bande donnée comprenant un corps rotatif (10, 40) sur une plage angulaire prédéterminée duquel s'enroule le support d'enregistrement magnétique (13) défilant dans une direction prédéterminée de manière oblique par rapport à un axe de rotation du corps rotatif, de premiers moyens de têtes d'enregistrement (L1, L2) pour le mode de fonctionnement longue durée disposés sur une périphérie externe du corps rotatif pour l'enregistrement du signal vidéo sur la partie de couche peu profonde du revêtement magnétique sur le support d'enregistrement magnétique en balayant le support d'enregistrement magnétique le long d'une première piste d'enregistrement (TL1, TL2, TL1', TL2') présentant une première largeur en mode de fonctionnement longue durée, de seconds moyens de têtes d'enregistrement (S1, S2) pour le mode standard disposés sur la périphérie externe du corps rotatif de manière à précéder les premiers moyens de têtes d'enregistrement d'un premier angle pour l'enregistrement du signal vidéo sur la partie de couche peu profonde du revêtement magnétique sur le support d'enregistrement magnétique en balayant le support d'enregistrement magnétique le long d'une seconde piste d'enregistrement (TS1, TS2, TS1', TS2') présentant une seconde largeur en mode standard, et de troisièmes moyens de têtes d'enregistrement (A1, A2) disposés sur la périphérie externe du corps rotatif de manière à précéder les seconds moyens de têtes d'enregistrement pour le mode standard d'un second angle pour enregistrer le signal audio pour une profondeur entière du revêtement magnétique sur le support d'enregistrement magnétique en balayant le support d'enregistrement magnétique le long d'une troisième piste (TA1, TA2, TA1', TA2') en mode de fonctionnement longue durée et en mode standard, les seconds moyens de têtes d'enregistrement (S1, S2) ayant une largeur de piste plus grande que celle des premiers moyens de têtes d'enregistrement (L1, L2) et que celle des troisièmes moyens de têtes d'enregistrement (A1, A2), lesdits seconds moyens de têtes d'enregistrement sont disposés sur la périphérie externe du corps rotatif (10) et une hauteur desdits seconds moyens de têtes d'enregistrement étant prévue par rapport aux premiers et troisièmes moyens de têtes d'enregistrement de sorte que la troisième piste d'enregistrement (TA1, TA2, TA1', TA2') est placée à l'intérieur de la seconde piste d'enregistrement (TS1, TS2) sur le support d'enregistrement (13), lesdits premiers moyens de têtes d'enregistrement sont disposés sur la périphérie externe du corps rotatif à un niveau par rapport aux niveaux des seconds et troisièmes moyens de têtes d'enregistrement ayant pour résultat que la première piste d'enregistrement (TL1 TL2, TL1', TL2') est placée à l'intérieur de la seconde piste d'enregistrement caractérisé en ce que, en mode de fonctionnement longue durée, lesdits seconds moyens de têtes d'enregistrement balayent le support d'enregistrement magnétique le long de la seconde piste d'enregistrement après que les troisièmes moyens de têtes d'enregistrement enregistrent le signal audio sur le support d'enregistrement le long de la troisième piste d'enregistrement de sorte que lesdits seconds moyens de têtes d'enregistrement balayent le support d'enregistrement magnétique incluant la troisième piste d'enregistrement et y appliquent un signal d'effacement de manière à effacer la couche peu profonde du support d'enregistrement adjacent auxdits seconds moyens de têtes d'enregistrement tout en laissant inaltérée une couche de la piste d'enregistrement du son, et en ce qu'après que les seconds moyens de têtes d'enregistrement balayent les pistes d'enregistrement enregistrées, les premiers moyens de têtes d'enregistrement balayent la première piste d'enregistrement qui est placée à l'intérieur de la seconde piste d'enregistrement et enregistrent le signal vidéo dans la couche peu profonde.

2. Un dispositif d'enregistrement magnétique comme revendiqué à la revendication 1, caractérisé en ce que lesdits premiers moyens de têtes d'enregistrement (L1, L2) et lesdits troisièmes moyens de têtes d'enregistrement (A1, A2) sont disposés sur la périphérie externe du corps rotatif (10) à un niveau qui fait que la première piste d'enregistrement (TL1, TL2, TL1', TL2') et la troisième piste d'enregistrement (TA1, TA2, TA1', TA2') se chevauchent mutuellement au moins partiellement.

3. Un dispositif d'enregistrement magnétique comme revendiqué à la revendication 2, caractérisé en ce que la largeur de piste des troisièmes moyens de têtes d'enregistrement (A1, A3) est plus grande que la largeur de piste des premiers moyens de tête d'enregistrement (L1, L2).

4. Un dispositif d'enregistrement magnétique comme revendiqué à la revendication 2, caractérisé en ce que la largeur de piste des premiers moyens de têtes d'enregistrement (L1, L2) est plus grande qu'un pas de la première piste d'enregistrement pour le mode de fonctionnement en longue durée et les premiers moyens de têtes d'enregistrement sont disposés sur la périphérie externe du corps rotatif (10) à un niveau qui fait qu'une partie de la première piste d'enregistrement sur laquelle un signal vidéo est enregistré pour une première trame, est balayée par les seconds moyens de têtes d'enregistrement (S1, S2) avant l'enregistrement du signal vidéo pour une trame subséquente.

5. Un dispositif d'enregistrement magnétique comme revendiqué à la revendication 2, caractérisé en ce que lesdits seconds moyens de têtes d'enregistrement (S1, S2) présentent une largeur de piste choisie de sorte que deux secondes pistes d'enregistrement adjacentes (TS1, TS2) en résultant et qui correspondent respectivement à une première trame et à une seconde trame du signal vidéo sont placées sur le support d'enregistrement magnétique (13), côte-à-côte sans laisser aucune zone non enregistrée entre elles en mode standard.

6. Un dispositif d'enregistrement magnétique comme revendiqué à la revendication 2, caractérisé en ce que lesdits troisièmes moyens de têtes d'enregistrement (A1, A2) présentent une largeur de piste choisie de sorte que deux troisièmes pistes d'enregistrement adjacentes (TA1, TA2) en résultant et qui correspondent respectivement à une première trame et à une seconde trame du signal vidéo, sont placées sur le support d'enregistrement magnétique (13), côte-à-côte sans laisser aucune zone non enregistrée entre elles en mode de fonctionnement longue durée.

7. Un dispositif d'enregistrement magnétique comme revendiqué à la revendication 1, caractérisé en ce que le dispositif comprend, en outre, de premiers moyens de commutation (22) pour fournir un signal vidéo de manière sélective soit à la première tête d'enregistrement (L1, L2) soit à la seconde tête d'enregistrement (S1, S2), et de seconds moyens de commutation (23) pour fournir de manière sélective soit le signal vidéo provenant des premiers moyens de commutation (22), soit un signal d'effacement pour l'effacement de signaux enregistrés sur la partie de couche peu profonde du revêtement magnétique sur le support d'enregistrement magnétique (13) vers la seconde tête d'enregistrement, lesdits premier et second moyens de commutation sont actionnés de sorte que la seconde tête d'enregistrement reçoit le signal vidéo et que la première tête vidéo est rendue inactive en mode standard et de sorte que la première tête d'enregistrement reçoit le signal vidéo et que la seconde tête d'enregistrement reçoit le signal d'effacement en mode de fonctionnement longue durée.
